# EUROPEAN PATENT APPLICATION

(11) **EP 4 255 028 A1**
(43) Date of publication of application: **04.10.2023**
(21) Application number: 23160514.8
(22) Date of filing: 07.03.2023
(51) Int. Cl.: H04W 40/02, H04W 48/18

(54) **USER EQUIPMENT (UE) ROUTING SELECTION POLICY (URSP) RULES FOR A ROAMING UE**

(30) Priority: 29.03.2022 IN 202241018483
(71) Applicant: Apple Inc., Cupertino, CA 95014 (US)
(72) Inventor: KISS, Krisztian, San Diego, California, 92131 (US); VENKATARAMAN, Vijay, Cupertino, California, 95014 (US); PRABHAKAR, Alosious Pradeep, 769134 Yishun (SG); SADIQUE, Mohammed, Sydney, New South Wales, 2000 (AU); MATOLIA, Rohit. R, 560001 Bengaluru, Karnataka (IN)
(74) Representative: Simmons & Simmons

(57) **Abstract**

The present application relates to improving a roaming service. In an example, a home network of a user equipment (UE) defines a first set of UE route selection policy (URSP) rules for managing traffic of the UE when connected to the home network. While roaming, the UE is connected to a visited network. Based on the first set of URSP rules and guidance information of the visited network indicating one or more URSP rules that the visited network can support for the UE, the home network defines a second set of URSP rules for managing traffic of the UE while roaming. The home network sends, via the visited network, the second set of URSP rules to the UE as rule information for use by the UE while connected to the visited network.

## Description

Cellular communications can be defined in various standards to enable communications between a user equipment and a cellular network. For example, Fifth generation mobile network (5G) is a wireless standard that aims to improve upon data transmission speed, reliability, availability, and more.

### BRIEF DESCRIPTION OF THE DRAWINGS

FIG. 1 illustrates an example of a 5G network architecture that incorporates both 3GPP (e.g., cellular) and non-3GPP (e.g., non-cellular) access to the 5G core network, in accordance with some embodiments.
FIG. 2 illustrates an example of a 5G network architecture that incorporates both dual 3GPP (e.g., LTE and 5G NR) access and non-3GPP access to the 5G core network, in accordance with some embodiments.
FIG. 3 illustrates an example of using user equipment (UE) rule selection policy (URSP) rules while a UE is roaming, in accordance with some embodiments.
FIG. 4 illustrates an example of a signaling and communication sequence diagram for configuring URSP rules for a UE as part of a UE registration procedure, in accordance with some embodiments.
FIG. 5 illustrates an example of a signaling and communication sequence diagram for configuring URSP rules for a UE as part of a UE configuration update procedure, in accordance with some embodiments.
FIG. 6 illustrates an example of a system that generates URSP rules for a UE, in accordance with some embodiments.
FIG. 7 illustrates an example of an operational flow/algorithmic structure for a UE to use URSP rules, in accordance with some embodiments.
FIG. 8 illustrates an example of an operational flow/algorithmic structure for a home network of a UE to define URSP rules of a UE based on guidance information of a visited network, in accordance with some embodiments.
FIG. 9 illustrates an example of an operational flow/algorithmic structure for a visited UE to provide guidance information to a home network of a UE, in accordance with some embodiments.
FIG. 10 illustrates an example of receive components, in accordance with some embodiments.
FIG. 11 illustrates an example of a UE, in accordance with some embodiments.
FIG. 12 illustrates an example of a base station, in accordance with some embodiments.

### DETAILED DESCRIPTION

The following detailed description refers to the accompanying drawings. The same reference numbers may be used in different drawings to identify the same or similar elements. In the following description, for purposes of explanation and not limitation, specific details are set forth, such as particular structures, architectures, interfaces, techniques, etc., in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

Generally, a first network can be a home network of a user equipment (UE). A roaming service can be provided by a second network to the UE when the UE is connected to the second network and not the first network such that the UE can still exchange (e.g., send/receive) traffic. The second network can be referred to herein as a visited network. A first set of UE route selection policy (URSP) rules can be defined by the first network to manage the UE's traffic when the UE is connected to the first network. However, while roaming, a second set of URSP rules may be needed for the UE to exchange traffic with the second network. The first network can generate the second set of URSP rules based on guidance information of the second network and can send, via the second network, the second set of URSP rules to the UE. In turn, the UE can use the second set of URSP rules while roaming. The guidance information can indicate one or more URSP rules that the second network defines for the UE in support of the traffic. A rule of the second set of URSP rules can be a copy of a URSP rule indicated by the guidance information, an update to such a URSP rule, or a combination of such a URSP rule with another rule from the first set of URSP rules.

Accordingly, while the UE is roaming, its traffic can be managed based on URSP rules defined by the home network in light of URSP rules supported by the visited network. This approach can improve the traffic management because the best possible URSP rules are used (e.g., the ones that best match the home network's URSP rules that would have been otherwise used). As such, while roaming, the end user can possibly experience a user experience and a quality of service similar to what they would have experienced in their home network.

Embodiments of the present disclosure are described in connection with 5G networks. However, the embodiments are not limited as such and similarly apply to other types of communication networks including other types of cellular networks.

The following is a glossary of terms that may be used in this disclosure.

The term "circuitry" as used herein refers to, is part of, or includes hardware components, such as an electronic circuit, a logic circuit, a processor (shared, dedicated, or group) or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable system-on-a-chip (SoC)), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, or transferring digital data. The term "processor circuitry" may refer to an application processor, baseband processor, a central processing unit (CPU), a graphics processing unit, a single-core processor, a dual-core processor, a triple-core processor, a quad-core processor, or any other device capable of executing or otherwise operating computer-executable instructions, such as program code, software modules, or functional processes.

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "base station" as used herein refers to a device with radio communication capabilities, that is a network component of a communications network (or, more briefly, a network), and that may be configured as an access node in the communications network. A UE's access to the communications network may be managed at least in part by the base station, whereby the UE connects with the base station to access the communications network. Depending on the radio access technology (RAT), the base station can be referred to as a gNodeB (gNB), eNodeB (eNB), access point, etc.

The term "network" as used herein reference to a communications network that includes a set of network nodes configured to provide communications functions to a plurality of user equipment via one or more base stations. For instance, the network can be a public land mobile network (PLMN) that implements one or more communication technologies including, for instance, 5G communications.

The term "computer system" as used herein refers to any type of interconnected electronic devices, computer devices, or components thereof. Additionally, the term "computer system" or "system" may refer to various components of a computer that are communicatively coupled with one another. Furthermore, the term "computer system" or "system" may refer to multiple computer devices or multiple computing systems that are communicatively coupled with one another and configured to share computing or networking resources.

The term "resource" as used herein refers to a physical or virtual device, a physical or virtual component within a computing environment, or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, or the like. A "hardware resource" may refer to compute, storage, or network resources provided by physical hardware element(s). A "virtualized resource" may refer to compute, storage, or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with or equivalent to "communications channel," "data communications channel," "transmission channel," "data transmission channel," "access channel," "data access channel," "link," "data link," "carrier," "radio-frequency carrier," or any other like term denoting a pathway or medium through which data is communicated. Additionally, the term "link" as used herein refers to a connection between two devices for the purpose of transmitting and receiving information.

The terms "instantiate," "instantiation," and the like as used herein refer to the creation of an instance. An "instance" also refers to a concrete occurrence of an object, which may occur, for example, during execution of program code.

The term "connected" may mean that two or more elements, at a common communication protocol layer, have an established signaling relationship with one another over a communication channel, link, interface, or reference point.

The term "network element" as used herein refers to physical or virtualized equipment or infrastructure used to provide wired or wireless communication network services. The term "network element" may be considered synonymous to or referred to as a networked computer, networking hardware, network equipment, network node, virtualized network function, or the like.

The term "information element" refers to a structural element containing one or more fields. The term "field" refers to individual contents of an information element, or a data element that contains content. An information element may include one or more additional information elements.

The term "3GPP Access" refers to accesses (e.g., radio access technologies) that are specified by 3GPP standards. These accesses include, but are not limited to, GSM/GPRS, LTE, LTE-A, and/or 5GNR. In general, 3GPP access refers to various types of cellular access technologies.

The term "Non-3GPP Access" refers any accesses (e.g., radio access technologies) that are not specified by 3GPP standards. These accesses include, but are not limited to, WiMAX, CDMA2000, Wi-Fi, WLAN, and/or fixed networks. Non-3GPP accesses may be split into two categories, "trusted" and "untrusted": Trusted non-3GPP accesses can interact directly with an evolved packet core (EPC) and/or a 5G core (5GC), whereas untrusted non-3GPP accesses interwork with the EPC/5GC via a network entity, such as an Evolved Packet Data Gateway and/or a 5G NR gateway. In general, non-3GPP access refers to various types on non-cellular access technologies.

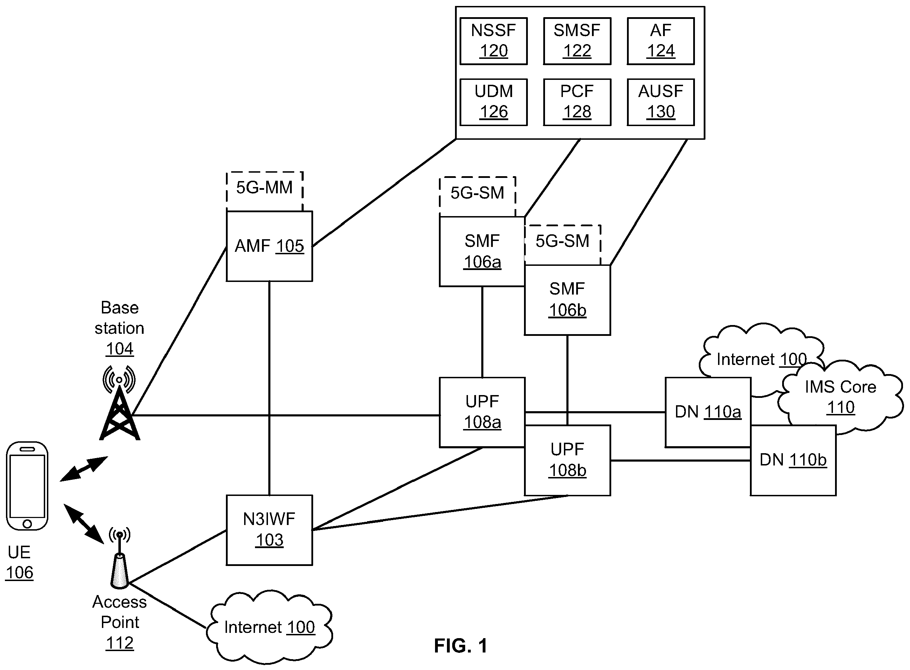

FIG. 1 illustrates an example of a 5G network architecture that incorporates both 3GPP (e.g., cellular) and non-3GPP (e.g., non-cellular) access to a 5G core network (CN), in accordance with some embodiments. As shown, a UE 106 may access the 5G CN through both a radio access network (RAN, e.g., a base station 104 that can be a gNB) and an access point (AP)112. The AP 112 may include a connection to the Internet 100 as well as a connection to a non-3GPP inter-working function (N3IWF) 103 network entity. The N3IWF may include a connection to a core access and mobility management function (AMF) 105 of the 5G CN. The AMF 105 may include an instance of a 5G mobility management (5G MM) function associated with the UE 106. In addition, the RAN (e.g., the base station 104) may also have a connection to the AMF 105. Thus, the 5G CN may support unified authentication over both connections as well as allow simultaneous registration for UE 106 access via both gNB 104 and AP 112. As shown, the AMF 105 may include one or more functional entities associated with the 5G CN (e.g., network slice selection function (NSSF) 120, short message service function (SMSF) 122, application function (AF) 124, unified data management (UDM) 126, policy control function (PCF) 128, and/or authentication server function (AUSF) 130). Note that these functional entities may also be supported by a session management function (SMF) 106a and an SMF 106b of the 5G CN. The AMF 105 may be connected to (or in communication with) the SMF 106a. Further, the base station 104 may be in communication with (or connected to) a user plane function (UPF) 108a that may also be in communication with the SMF 106a. Similarly, the N3IWF 103 may be communicating with a UPF 108b that may also be communicating with the SMF 106b. Both UPFs may be communicating with the data network (e.g., DN 110a and 110b) and/or the Internet 100 and Internet Protocol (IP) Multimedia Subsystem/IP Multimedia Core Network Subsystem (IMS) core network 110.

Generally, base station 104 communicates over a transmission medium with one or more UEs (e.g., including the UE 106). Each of the user devices may be referred to herein as a "user equipment" (UE). The base station (BS) 104 may be a base transceiver station (BTS) or cell site (a "cellular base station") and may include hardware that enables wireless communication with the UE 106.

The communication area (or coverage area) of the base station 104 may be referred to as a "cell." The base station 104 and the UE 106 may be configured to communicate over the transmission medium using any of various radio access technologies (RATs), also referred to as wireless communication technologies, or telecommunication standards, such as GSM, UMTS (associated with, for example, WCDMA or TD-SCDMA air interfaces), LTE, LTE-Advanced (LTE-A), 5G new radio (5GNR), HSPA, 3GPP2 CDMA2000 (e.g., 1xRTT, 1xEV-DO, HRPD, eHRPD), etc. If the base station 104 is implemented in the context of LTE, it may alternately be referred to as an 'eNodeB' or 'eNB'. If base station 104 is implemented in the context of 5G NR, it may alternately be referred to as 'gNodeB' or 'gNB'.

The base station 104 may also be equipped to communicate with a network (e.g., a core network of a cellular service provider, such as the 5G CN, a telecommunication network, such as a public switched telephone network (PSTN), and/or the Internet, among various possibilities). Thus, the base station 104 may facilitate communication between the user devices and/or between the UE 106 and the network. In particular, the cellular base station 104 may provide UEs 106 with various telecommunication capabilities, such as voice, SMS, and/or data services.

The base station 104 and other similar base stations operating according to the same or a different cellular communication standard may thus be provided as a network of cells, which may provide continuous or nearly continuous overlapping service to UE 106 and similar devices over a geographic area via one or more cellular communication standards.

Thus, while base station 104 may act as a "serving cell" for UE 106 as illustrated in Figure 1, the UE 106 may also be capable of receiving signals from (and possibly within communication range of) one or more other cells, which may be referred to as "neighboring cells." Such cells may also be capable of facilitating communication between user devices and/or between user devices and the network 100. Such cells may include "macro" cells, "micro" cells, "pico" cells, and/or cells which provide any of various other granularities of service area size.

In some embodiments, the base station 104 may be a next generation base station, e.g., a 5G New Radio (5GNR) base station, or "gNB". In some embodiments, a gNB may also be connected to a legacy evolved packet core (EPC) network and/or to a NR core (NRC) network. In addition, a gNB cell may include one or more transition and reception points (TRPs). In addition, a UE capable of operating according to 5G NR may be connected to one or more TRPs within one or more gNBs.

The UE 106 may be capable of communicating using multiple wireless communication standards. For example, the UE 106 may be configured to communicate using a wireless networking (e.g., Wi-Fi) and/or peer-to-peer wireless communication protocol (e.g., Bluetooth, Wi-Fi peer-to-peer, etc.) in addition to at least one cellular communication protocol (e.g., GSM, UMTS (associated with, for example, WCDMA or TD-SCDMA air interfaces), LTE, LTE-A, 5G NR, HSPA, 3GPP2 CDMA2000 (e.g., 1xRTT, 1xEV-DO, HRPD, eHRPD), etc.). The UE 106 may also or alternatively be configured to communicate using one or more global navigational satellite systems (GNSS, e.g., GPS or GLONASS), one or more mobile television broadcasting standards (e.g., ATSC-M/H or DVB-H), and/or any other wireless communication protocol, if desired. Other combinations of wireless communication standards (including more than two wireless communication standards) are also possible.

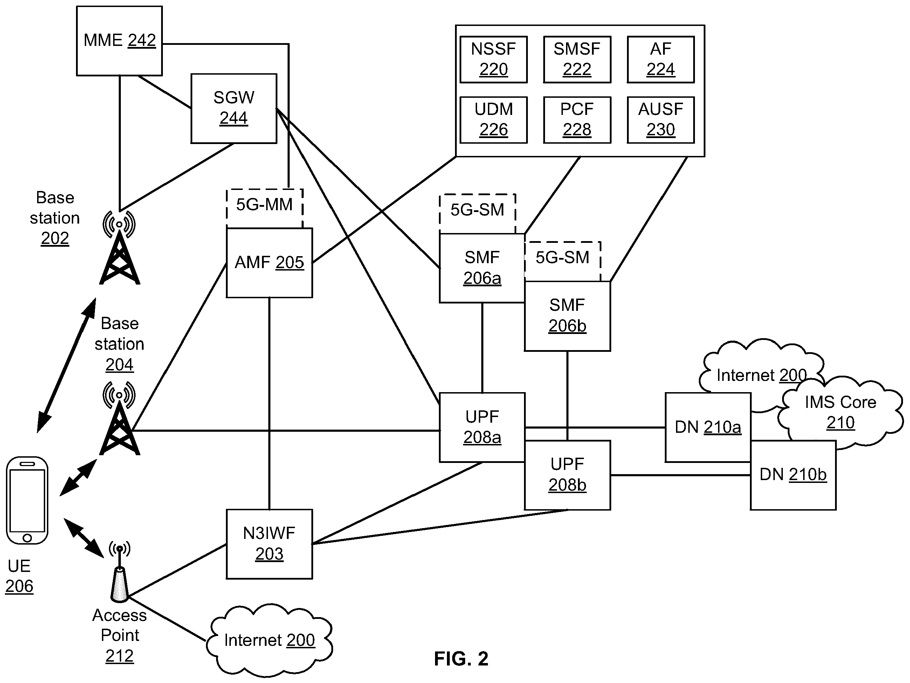

FIG. 2 illustrates an example of a 5G network architecture that incorporates both dual 3GPP (e.g., LTE and 5G NR) access and non-3GPP access to the 5G CN, in accordance with some embodiments. As shown, a UE 206 may access the 5G CN through both a RAN (e.g., a base station 204, such as gNB) and an AP 212. The AP 212 may include a connection to the Internet 200 as well as a connection to a N3IWF 203 network entity. The N3IWF 203 may include a connection to an AMF 205 of the 5G CN. The AMF 205 may include an instance of a5G MM function associated with the UE 206. In addition, the RAN (e.g., the base station 204) may also have a connection to the AMF 205. Thus, the 5G CN may support unified authentication over both connections as well as allow simultaneous registration for UE 206 access via both the base station 204 and the AP 212. In addition, the 5G CN may support dual-registration of the UE 106 on both a legacy network (e.g., LTE via a base station 202, such as an eNB) and a 5G network (e.g., via the base station 204). As shown, the base station 202 may have connections to a mobility management entity (MME) 242 and a serving gateway (SGW) 244. The MME 242 may have connections to both the SGW 244 and the AMF 205. In addition, the SGW 244 may have connections to both an SMF 206a and an UPF 208a. As shown, the AMF 205 may include one or more functional entities associated with the 5G CN (e.g., NSSF 220, SMSF 222, AF 224, UDM 226, PCF 228, and/or AUSF 230). The UDM 226 may also include a home subscriber server (HSS) function and the PCF 228 may also include a policy and charging rules function (PCRF). These functional entities may also be supported by an SMF606a and an SMF 206b of the 5G CN. The AMF 205 may be connected to (or in communication with) the SMF 206a. Further, the base station 204 may be in communication with (or connected to) the UPF 208a that may also be in communication with the SMF 206a. Similarly, the N3IWF 203 may be communicating with a UPF 208b that may also be communicating with an SMF 206b. Both UPFs may be communicating with the data network (e.g., DN 210a and 210b) and/or the Internet 200 and an IMS core network 210.

In various embodiments, one or more of the above-described network entities may be configured to perform methods to support roaming services based on URSP rules, as further described herein.

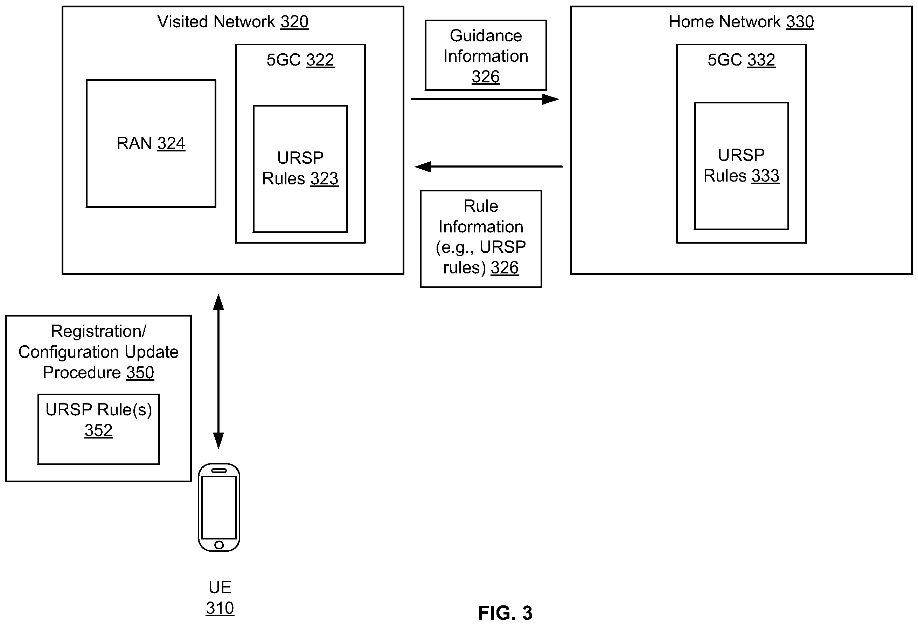

FIG. 3 illustrates an example of using URSP rules while a UE 310 is roaming, in accordance with some embodiments. The roaming can include the UE 310 being connected to a visited network 320 instead of its home network 330, where the visited network 320 provides communication services to the UE 310. Generally, the home network 330 can be configured by a mobile network operator with which the UE 310 is subscribed (e.g., with which a user of the UE 310 has a used account) and can provide different communication services to the UE 310 (e.g., voice, text, data uploads/downloads, data streaming, etc.). Some of these services can be provided by using network slicing technology. Network slicing devices network connections into multiple distinct virtual connections that provide different amounts of resources to different types of traffic. Roaming (international or domestic) extends the coverage of some or all of these services to the visited network 320 such that the user can continue to experience the extended services while their UE 310 is connected to the visited network 320. The visited network 320 can be configured by a different mobile network operator and the UE 310 may not be subscribed therewith (e.g., its user may not have a user account with this mobile network operator). The visited network 320 may also use network slicing technology, although the network slicing configuration can be different than that of the home network 330.

In an example, the visited network 320 is a visited public land mobile network (V-PLMN), whereas the home network 330 is a home public land mobile network (H-PLMN). Each of such public land mobile network can support one or more communications technologies including, for instance, 5G communications. This is shown in Figure 3, where the visited network 320 and the home network 330 include a 5G core network 322 and a 5G core network 332, respectively. Each of the 5G core networks 322 and 332 can include the network functions described herein above in FIG.s 1-2.

The UE 310 is connected to the visited network 320 via a RAN 324, such as a gNB. In this way, traffic to and from the UE 310 can be sent and received by the visited network 320 (e.g., the 5GC core network 322) via the RAN 324, whereby the visited network 320 at least in part processes this traffic (e.g., routes it from and to the proper source and end destinations). Depending on the roaming, some of the traffic can also be processed by the home network 330 (e.g., the 5GC core network 332, in case of home routed (HR) roaming).

In an example, the traffic processing at a network can depend on URSP rules. A URSP rule indicates a mapping of particular traffic of the UE (e.g., traffic that is specific to an application, traffic that is specific to a type of application, etc.) to connectivity parameters of a data session (e.g., a logical connection) with the network (e.g., a 5G PDU session in the case of a 5G network). For instance, in a 5G network, a URSP rule informs a UE about the connection parameters to use for particular traffic.

When network slicing technology is implemented, URSP rules enable a UE to switch between different network slices depending on the particular traffic (e.g., depending on the particular application associated with the traffic, the particular type of applications associated with the traffic, etc.). For instance, a network slice can be used for video streaming over broadband, whereas another network slice can be used for secure enterprise data access.

A network slice can represent a logical network that provides specific network capabilities and network characteristics, and that can be dynamically defined. A UE may access multiple network slices over the same RAN. Each network slice may serve a particular service type with agreed upon Service-level Agreement (SLA). In a 5G network, the network slice is defined within a PLMN and includes the 5G core network and RAN network control plane and user plan network. The network slice is identified by a single network slice selection assistance information (S-NSSAI). The S-NSSAI may be associated with a PLMN (e.g., PLMN ID) and have network-specific values or have standard values that indicate a slice/service type (SST) and a slice differentiator (SD).

Referring back to FIG. 3, the use case of a 5G network is described herein next. However, the description equivalently applies to other types of networks that may rely at least in part on URSP rules for traffic management while a UE is roaming.

The 5G core network 332 of the home network 330 can generate URSP rules 333 for the UE 310. The URSP rules 333 are used to manage traffic of the UE 310 when the UE 310 is connected to the home network 330 and can be stored by the 5G core network 332 (e.g., by a user data repository (UDR) thereof). A copy of the URSP rules 333 can be sent to and stored by the UE 310 for local management of the traffic at the UE 310.

When roaming, the UE 310 is connected to the visited network 320 rather than the home network 330. Although the roaming includes the visited network 320 extending some or all of the services of the home network 330 to the UE 310, the configuration of such services can differ between the two networks 320 and 330 including, for instance, the network slicing configurations among other configurations. As such, the URSP rules 333 defined by the home network 330 may not be optimally usable to the UE 310 while roaming.

As such, in support of roaming, an additional set of URSP rules 352 can be defined for and stored by the UE 310. The URSP rule(s) 352 can be provided to the UE 310 as part of a UE registration procedure or a UE configuration update procedure (shown in FIG. 3 as a registration/configuration update procedure 350). Generally, the URSP rule(s) 352 informs the UE 310 about the connection parameters to use for particular traffic while connected to the visited network 320.

In an example, the home network 330, rather than the visited network 320, generates the URSP rule(s) 352 based on its own URSP rules 330 and on guidance information 326 received from the visited network 320. The guidance information 326 can indicate one or more URSP rules 323 that the visited network 320 supports for the UE 310. For instance, the visited network 320 defines the URSP rule(s) 323 given its own services and related configurations (including network slicing configuration) and sends the guidance information 326 to the home network 330. The guidance information 326 can take the format of the URSP rule(s) 323 by including traffic descriptor information and route selection descriptor information. In turn, the home network 330 defines a URSP rule as a copy of the guidance information 326 (or a relevant portion thereof), an update to the guidance information 326 (or to a relevant portion thereof), or a combination of one of its URSP rules 333 with the guidance information 326 (or with a relevant portion thereof). In certain situations, the home network 330 can also reject a URSP rule indicated by the guidance information 326. Once generated, the home network 330 sends rule information to the UE 310 via the visited network 320, where rule information indicates the URSP rule(s) 352 (e.g., by including the traffic descriptor information and the route selection descriptor information).

According to the above approach, the URSP rule determination and provisioning remains in the control of the home network 330 (e.g., an H-PLMN). The visited network (e.g., a V-PLMN) can only influence the determination and provisioning of such rules. In the case of 5G networks, the V-PCF (e.g., PCF of the V-PLMN) cannot adjust the URSP rules 352 from the H-PCF (e.g., PCF of the H-PLMN). However, the V-PLMN can provide "V-PLMN URSP Guidance" that H-PLMN can take as an input for creation of URSP policy, where this guidance can take the format of URSP rules 323. The H-PLMN can decide to accept a V-PLMN-provided URSP rule 323 as is, reject it, or update an existing H-PLMN-provided rule 333 with V-PLMN provided parameters. The UE policy related information is either stored in the UDR, is received from the AF, or is based on local policies or on a combination stored policies, received policies, and local policies. For instance, AF guidance for URSP rule determination can be provided to the V-PCF of the V-PLMN, such that the V-PCF generate the related guidance information 326 based on the input from the AF. Further, the URSP rules 352 contain the S-NSSAI that refer to the H-PLMN S-NSSAIs, given that the H-PCF generates the URSP rules 352. In roaming scenario, there could be multiple S-NSSAIs in the V-PLMN mapping to one S-NSSAI in the H-PLMN. In this case, the H-PLMN can select a suitable S-NSSAI in the V-PLMN mapping and use that in the generation of the URSP rules 352.

The UE 310 can store the URSP rule(s) 352. When traffic is sent from the UE 310, the UE 310 can look up the URSP rule(s) 352 depending on a descriptor of the traffic (e.g., the application that uses the traffic, the application type, etc.) to determine connectivity parameters indicates by route selection descriptor (e.g., an S-NSSAI, a type of network access, etc.). The connectivity parameters are used to send the traffic.

In certain situations, a traffic descriptor of a URSP rule 352 is the same as the one of a URSP rule 333 (also stored by the UE 310). In this case, to determine which of the two route selection descriptors should be used, at least the route selection descriptor of the URSP rule 352 includes an identifier of the visited network 320 (e.g., a PLMN identifier (ID)) to indicate that this route selection descriptor is to be used while the UE 310 connected to the visited network 320. The URSP rule 333 can, optionally, include an identifier of the home network 330. Hence, while roaming, the UE 310 can determine a specific route selection descriptor should be used because the PLMN ID matches that of the visited network 320.

As such, a network identifier (e.g., PLMN ID) can be used as a route selection validation criteria. In other words, URSP rules are looked up based on a traffic descriptor and a URSP rule is identified based on match to the traffic descriptor. This URSP rule can include multiple route selection descriptors (or, alternatively, multiple URSP rules can be identified, each including one of the rout selection descriptors). In this case, the network identifier is used to select the relevant route selection descriptor from the multiple route selection descriptors based on a match thereto.

The above use of the network identifier enables an H-PLMN to combine "V-PLMN URSP Guidance" into H-PLMN URSP rules, where the H-PLMN may create PLMN-specific route selection descriptor for the same traffic descriptor within the same URSP rule. A PLMN-specific route selection descriptor is distinguished with a new route selection validation criteria: a PLMN criteria parameter that includes a PLMN ID. The rule selection descriptor (RSD) rule is not considered to be valid if the PLMN criteria does not match the PLMN ID with which the UE is currently registered. Such criteria can be defined as a table in a technical specification with which the UE and the networks comply:

**Table 1.**

| Information name | Description | Category | PCF permitted to modify in URSP | Scope |
|---|---|---|---|---|
| Route selection validation criteria | This part defines the Route Validation Criteria components | Optional | | |
| PLMN Criteria | The RSD rule is not considered to be valid if the PLMN criteria does not match the PLMN ID the UE is currently registered with. | Optional | Yes | UE Context |

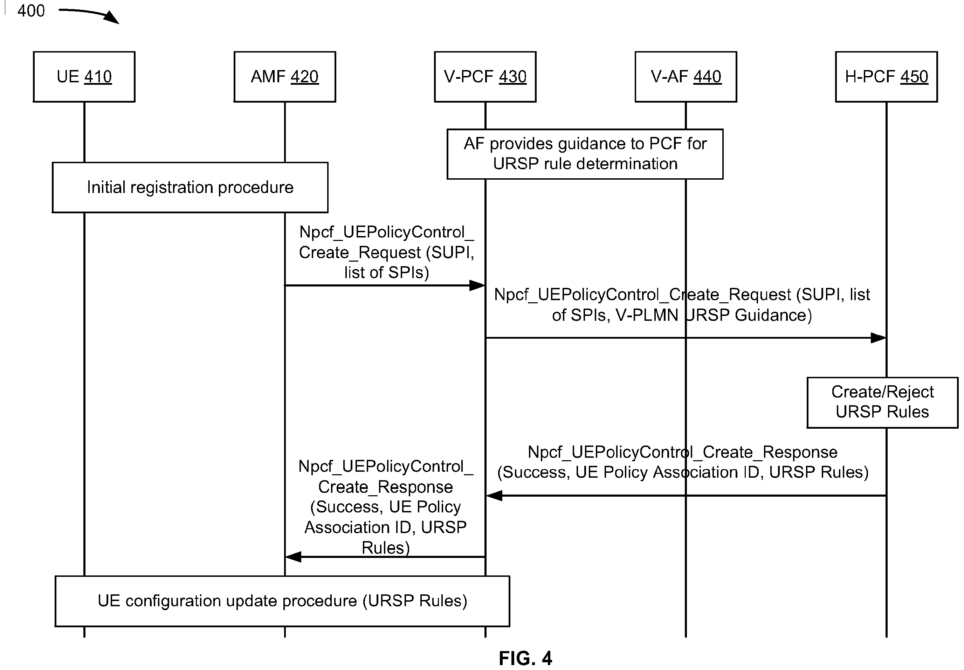

FIG. 4 illustrates an example of a signaling and communication sequence diagram 400 for configuring URSP rules for a UE 410 as part of a UE registration procedure, in accordance with some embodiments. This procedure can be performed to connect the UE 410 to a visited network such to extend roaming services to the UE 410. In the illustration of FIG. 4, an AMF 420, a V-PCF 430, and a V-AF 440 can be network functions of a V-PLMN (e.g., the visited network 320 of FIG. 3). In comparison, an H-PCF 450 can be a network function of an H-PLMN (e.g., the home network 330 of FIG. 3).

The V-AF 440 can provide guidance to the V-PCF 430 for URSP rule determination. In the case of a 5G core network (e.g., the 5G core network 322 of FIG. 3), this guidance can be provided according to 3GPP TS 23.502, V17.4.0 (2022-03), clause 4.15.6.10. 3GPP TS 23.502 is incorporated herein by reference in its entirety.

The UE 410 and the AMF 420 can perform an initial registration procedure. In the case of a 5G core network (e.g., the 5G core network 322 of FIG. 3), this guidance can be provided according to 3GPP TS 23.502, clause 4.2.2.2.2, steps 1-21. This procedure can involve a registration request that includes a list of public service identities (PSIs). The AMF 420 then sends a Npcf_UEPolicyControl_Create_Request message to the V-PCF 430. This message can include the list of PSIs and a subscription permanent identifier (SUPI) allocated to a subscriber (e.g., a user of the UE 310). In turn, the V-PCF 430 sends a Npcf_UEPolicyControl_Create_Request message to the H-PCF 450. In addition to the SUPI and list of PSIs, this message includes the V-PLMN URSP guidance (e.g., the guidance information 326 of FIG. 3). The V-PLMN URSP guidance can be derived from the guidance input of the V-AF 440 to the V-PCF 430.

Next, the H-PCF 450 uses the V-PLMN URSP guidance to decide whether to create and/or reject URSP rules indicated by the V-PLMN URSP guidance. For example, the H-PCF 450 uses the SUPI to identify its own set of H-PLMN URSP rules (e.g., as stored in a UDR of the H-PLMN for the SUPI). Based on this set of H-PLMN URSP rules and, optionally other parameters (e.g., a local configuration of the V-PLMN and/or H-PLMN, an operator policy of the V-PLMN and/or H-PLMN, and/or input of an AF of the V-PLMN and/or H-PLMN), the H-PCF 450 can determine whether a V-PLMN-indicated URSP rule is accepted, needs to be updated, needs to be combined with one or more of the H-PLMN rules, or rejected.

Thereafter, the H-PCF 450 sends a Npcf_UEPolicyControl_Create_Response message to the V-PCF 430. This response message indicates a success of the UE policy control creation, a UE policy association ID, and URSP rules. These URSP rules are the ones determined based on the set of H-PLMN rules and the V-PLMN URSP guidance (and on, optionally, the other parameters). The V-PCF 430 sends a copy of this response message as a Npcf_UEPolicyControl_Create_Response message to the AMF 420. Next, a UE configuration update procedure is performed to complete the registration. In the case of a 5G core network (e.g., the 5G core network 322 of FIG. 3), this procedure can be performed according to 3GPP TS 23.502, clause 4.2.4.3, where the URSP rules indicated in the response message are used as part of the UE configuration update procedure.

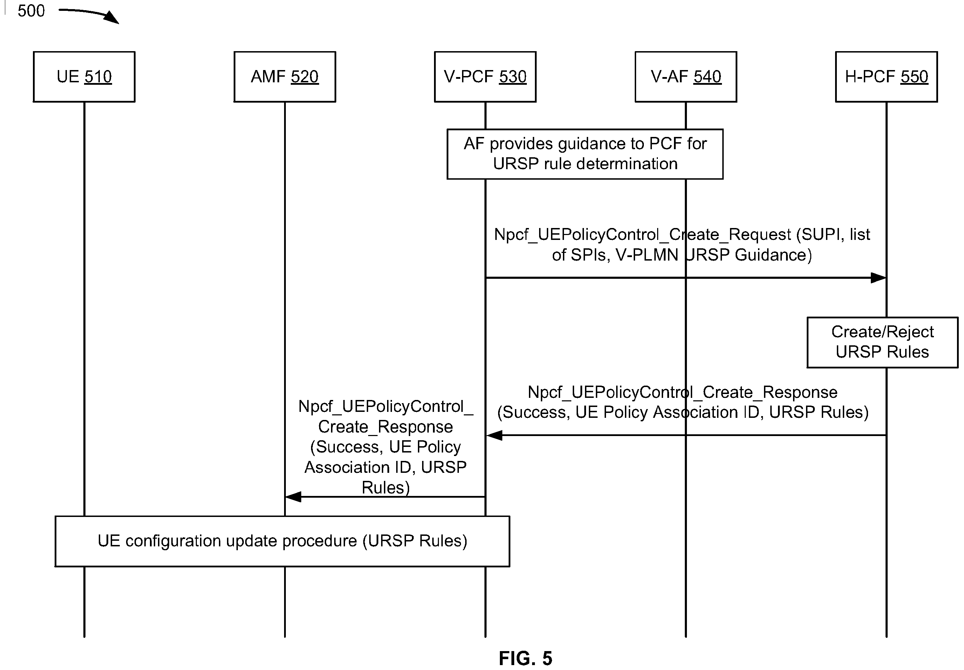

FIG. 5 illustrates an example of a signaling and communication sequence diagram for configuring URSP rules for a UE 510 as part of a UE configuration update procedure, in accordance with some embodiments. This procedure can be performed any time after the UE 510 is registered with a visited network. In the illustration of FIG. 5, an AMF 520, a V-PCF 530, and a V-AF 540 can be network functions of a V-PLMN (e.g., the visited network 320 of FIG. 3). In comparison, an H-PCF 550 can be a network function of an H-PLMN (e.g., the home network 330 of FIG. 3).

Also here, at some point, the V-AF 540 can provide guidance to the V-PCF 530 for URSP rule determination. In the case of a 5G core network (e.g., the 5G core network 322 of FIG. 3), this guidance can be provided according to 3GPP TS 23.502. In turn, the V-PCF 530 sends a Npcf_UEPolicyControl_Create_Request message to the H-PCF 550. In addition to a SUPI and a list of PSIs, this message includes the V-PLMN URSP guidance (e.g., the guidance information 326 of FIG. 3). The V-PLMN URSP guidance can be derived from the guidance input of the V-AF 540 to the V-PCF 530.

Next, the H-PCF 550 uses the V-PLMN URSP guidance to decide whether to create and/or reject URSP rules indicated by the V-PLMN URSP guidance. For example, the H-PCF 550 uses the SUPI to identify its own set of H-PLMN URSP rules (e.g., as stored in a UDR of the H-PLMN for the SUPI). Based on this set of H-PLMN URSP rules and, optionally other parameters (e.g., a local configuration of the V-PLMN and/or H-PLMN, an operator policy of the V-PLMN and/or H-PLMN, and/or input of an AF of the V-PLMN and/or H-PLMN), the H-PCF 550 can determine whether a V-PLMN-indicated URSP rule is accepted, needs to be updated, needs to be combined with one or more of the H-PLMN rules, or rejected.

Thereafter, the H-PCF 550 sends a Npcf_UEPolicyControl_Create_Response message to the V-PCF 530. This response message indicates a success of the UE policy control creation, a UE policy association ID, and URSP rules. These URSP rules are the ones determined based on the set of H-PLMN rules and the V-PLMN URSP guidance (and on, optionally, the other parameters). The V-PCF 530 sends a copy of this response message as a Npcf_UEPolicyControl_Create_Response message to the AMF 520. Next, a UE configuration update procedure is performed to complete the registration. In the case of a 5G core network (e.g., the 5G core network 322 of FIG. 3), this procedure can be performed according to 3GPP TS 23.502, clause 4.2.4.3, where the URSP rules indicated in the response message are used as part of the UE configuration update procedure.

In the above two figures, the Npcf_UEPolicyControl_Create service operation can be updated in a technical specification to indicate that the V-PLMN URSP Guidance is needed (required or optional). For example, in 3GPP TS 23.502, clause 5.2.5.6.2 can be updated to include:
Service operation name: Npcf_UEPolicyControl_Create
Description: NF Service Consumer can request the creation of a UE Policy Association by providing relevant parameters about the UE context to the PCF.
Inputs, Required: Notification endpoint, SUPI.
Inputs, Optional: H-PCF ID (if the NF service producer is V-PCF and AMF is NF service consumer), information provided by the AMF as define in 6.2.1.2 of TS 23.503 [20], such as Access Type, Permanent Equipment Identifier, GPSI, User Location Information, UE Time Zone, Serving Network (PLMN ID, or PLMN ID and NID, see clause 5.34 of TS 23.501 [2]), RAT type, UE policy information including the list of PSIs, OS id and Internal Group (see TS 23.501 [2]), VPLMN URSP Guidance.
Outputs, Required: Success or Failure, UE Policy Association ID.
Outputs, Optional: Policy Control Request Trigger of UE Policy Association. In the case of H-PCF is producer, UE policy information (see clause 5.2.5.6.1).

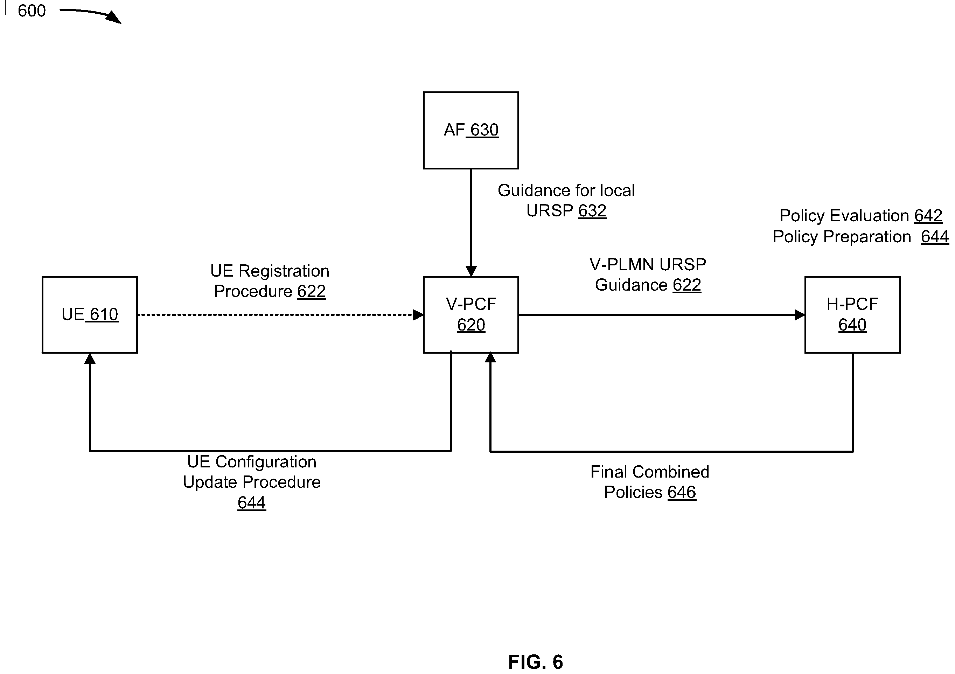

FIG. 6 illustrates an example of a system 600 that generates URSP rules for a UE 610, in accordance with some embodiments. The system 600 can include a V-PCF 620, a V-AF 630, and a H-PCF 640. The V-PCF 620 and the V-AF 630 can be network functions of a V-PLMN (e.g., the visited network 320 of FIG. 3). In comparison, the H-PCF 640 can be a network function of an H-PLMN (e.g., the home network 330 of FIG. 3).

As illustrated with a dotted arrow, a UE registration procedure 622 of the UE 610 with the V-PLMN may be initiated resulting in the UE 610 receiving URSP rules generated by the H-PCF 640. Additionally or alternatively, such rules can be received as part of a UE configuration update procedure 644. The UE configuration update procedure 644 may, but need not, be a part of the UE registration procedure 622. In both cases, the AF 630 (which can, but need not be a V-AF) provides guidance for local URSP to the V-PCF 620. This guidance can be provided according to 3GPP TS 23.502, clause 4.15.6.10. The V-PCF 620 then generates and sends V-PLMN URSP guidance to the H-PCF 40. In turn, the H-PCF 640 performs a policy evaluation 642 of the V-PLMN URSP guidance and completes a policy preparation 644 that includes acceptance, update, combination, and/or rejection of V-PLMN-indicated URSP rules to generate a set of final combined policies 646, such as a set of URSP rules generated based on the H-PLMN URSP-rules local to the H-PLMN and applicable to the UE 610 (e.g., applicable to the relevant SUPI) and on the V-PLMN-indicated URSP rules. The final combined policies 646 are sent to the V-PCF 620 that then sends them to the UE 610 as part of the UE configuration update procedure 644. The UE 610 stores the final combined policies as a set of URSP rules usable while roaming. The V-PCF 620 may also store the final combined policies 646 for the UE 610 (e.g., in association with the SUPI).

In an example, the V-PCF 620 generates the V-PLMN URSP guidance based on the guidance input of the AF 630, a local configuration and/or an operator policy. Generally, the V-PLMN URSP guidance indicates a set of URSP rules that the V-PCF 620 can support for the UE 610 where these rules meet the local configuration (e.g., type of roaming services that are provided, network slicing, etc.) and operator policy (e.g., type of traffic supported and type of network access for a type of traffic) given the guidance input related to traffic routing, service exposure, etc. that the UE 610 may expect (e.g., to operations of the AF 630 as they relate to applications that the UE 610 may use). The V-PLMN URSP guidance is an example of the guidance information 326 of FIG. 3 and can include a traffic descriptor and a route selection descriptor of a V-PLMN URSP rule that the V-PLMN would support for the UE 610.

The policy evaluation 642 involves the H-PCF 640 evaluating each one of the V-PLMN-indicated URSP rules (referred to herein as a V-PLMN URSP rule) and generating a policy evaluation report indicating whether such a V-PLMN URSP rule is accepted, needs an update, is to be combined with a H-PLMN URSP rule, is rejected, and/or includes an update that is to be accepted or rejected. The policy evaluation 642 can be based on the H-PLMN URSP rules stored for the UE 610 and, optionally, other parameters, such as a local configuration and/or an operator policy of the H-PLMN. For instance, if a V-PLMN URSP rule has no matching H-PLMN URSP rule, the V-PLMN URSP rule can be accepted as long as the user is allowed by its H-PLMN to access such local services by V-PLMN and it does not conflict with the local configuration and/or the operator policy (in which case, the V-PLMN URSP rule can be rejected). The match can be at the traffic descriptor level, where the V-PLMN URSP rule and the H-PLMN URSP rule include the same traffic descriptor. A no match corresponds to the V-PLMN URSP rule's not using any of the traffic descriptors included in the H-PLMN URSP rules. If a match exists, the policy evaluation 642 can check whether an update is needed or not based on a number of factors, including the route selection descriptor of the V-PLMN rule, the route selection descriptor of the V-PLMN of the matched H-PLMN rule, the local configuration and/or the operator policy. Examples of such evaluations are further described using illustrative use cases herein below. The output of the policy evaluation 642 can be an evaluation report having a particular format (e.g., a table) that identifies each of the V-PLMN URSP rules indicated in the V-PLMN URSP guidance 622 and the corresponding evaluation result.

If a V-PLMN URSP rule is accepted, the evaluation report indicates that a new policy is to be generated. If a V-PLMN URSP rule is rejected, the evaluation report indicates that the policy is rejected. If an update to a V-PLMN URSP rule is needed, the evaluation report indicates that an update is needed. The update can be a change to route selection descriptor and/or a selection of a route selection descriptor. The update can also be combined with the matched H-PLM URSP rule. If an update to a V-PLMN URSP rule is rejected, the evaluation report indicates that the update is rejected.

The evaluation report can be input to the policy preparation 644 to then prepare the final combined policies 646. In particular, the H-PCF 640 can retrieve the relevant H-PLMN URSP rules from the H-UDR, perform edits thereto (e.g., accept, update, combine, etc.), and store the edited URSP rules in the H-UDR in association with the UE 610 (e.g., with the SUPI). If the evaluation report indicates a new policy, the H-PCF 640 determines that the equivalent H-PLMN URSP rule is unavailable and generates and stores a new H-PLMN URSP rule in the H-UDR. If the evaluation report indicates a rejected policy, the H-PCF 640 determines that the equivalent H-PLMN URSP rule is unavailable and yet no such rule should be generated. Accordingly, the H-PCF 640 may store an indication that the policy is rejected in the H-UDR. If the evaluation report indicates that an update is needed, the H-PCF 640 determines the matched H-PLMN URSP rule, creates an updated URSP rule, and stores the updated URSP rule in the H-UDR. If the evaluation report indicates that an update is rejected, the H-PCF 640 determines the matched H-PLMN URSP rule, determines that the route selection descriptor thereof is to be used as an existing policy, and stores an indication of using the existing policy in the H-UDR. Thereafter the final combined policies 646 can be generated by including the new URSP rule(s), the edited URSP rule(s), and/or the existing URSP rule(s) in route information to be sent to the UE 610.

Herein next, five example use cases of the policy evaluation 642 and the policy preparation 644 are described. However, the embodiments of the present disclosure are not limited as such and apply to any other use cases where a V-PLMN URSP rules is indicated in a V-PLMN URSP guidance and a decision is made based on an existing set of H-PLMN URSP rules, local configurations, and/or operator policies.

A first illustrative use case involves an application that the V-PLMN supports, but no equivalent application is supported by the H-PLMN. For instance, while the UE 610 is roaming, a new application (e.g., a news streaming application) is downloaded to the UE 610, where this application is supported by the V-PLMN but not the H-PLMN network. Based on the guidance for local URSP 632, the V-PCF 620 sends the V-PLMN URSP guidance 622 that includes a traffic descriptor and a route selection descriptor. The traffic descriptor includes, among other things, an application descriptor that identifies the application. The H-PCF 640 determines that no match exists between this traffic descriptor and traffic descriptors of H-PLMN rules stored for the UE 610. Because no match is found and the application is not supported, the H-PCF 640 determined that a new URSP rule is to be generated and sent to the UE 610 (assuming that the application does not violate a local configuration and/or an operator policy of the H-PLMN). The new URSP rule is then generated as a copy of the V-PLMN rule indicated by the V-PLMN URSP guidance 622 (e.g., by copying the traffic descriptor and the route selection descriptor), mapped to the V-PLMN, and sent to the UE 610. Below is an example table summarizing this process. The left column corresponds to the V-PLMN rule indicated by the V-PLMN URSP guidance 622 (AppX corresponds to the application). The center column corresponds to the matched V-PLMN URSP rule (none in this first use case). The right column corresponds to the URSP rule sent to the UE 610.

**Table 2.**

| V-PLMN URSP | | H-PLMN Matching URSP | | H-PLMN Combined URSP | |
|---|---|---|---|---|---|
| Traffic Descriptor | Route Selection Descriptor | Traffic Descriptor | Route Selection Descriptor | Traffic Descriptor | Route Selection Descriptor |
| Rule Precedence = 1 | Route Selection Descriptor Precedence = 1 | Not Available | No Available | Rule Precedence = 1 | Route Selection Descriptor Precedence = 1 |
| Application Descriptor = AppX | Network Slice Selection: S-NSSAI-a Access Type Preference: 3GPP access Non-Seamless Offload Indication: Permitted (WLAN SSID-x) | | | Application Descriptor = AppX | Network Slice Selection: S-NSSAI-a Access Type Preference: 3GPP access Non-Seamless Offload Indication: Permitted (WLAN SSID-x) |

A second illustrative use case involves local break out (LBO) roaming. The LBO roaming enables the UE 610 to receive services directly from the V-PLMN without the need to tunnel some of the traffic back to the H-PLMN. Here, an application is used by the UE 610 and is supported by the V-PLM and H-PLMN network. While the UE 610 is connected to the V-PLMN, the LBO roaming can service the application without a tunnel to the H-PLMN. In this illustrative use case, the V-PCF 620 sends the V-PLMN URSP guidance 622 that includes a traffic descriptor and a route selection descriptor for a policy of using the application by the UE 610. As shown in Table 3 below, this guidance 622 is to use data network name (DNN) and network slide for the LBO roaming (e.g., edge computing in this use case). The traffic descriptor is matched to an H-PLMN URSP rule that indicates a different policy for using the application (e.g., by including different route selection descriptor information). As shown in Table 3 below, the V-PLMN URSP's route selection descriptor indicates a particular S-NSSAI (shown as S-NSSAI-x) and a particular DNN selection (shown as internet). In comparison, the selection descriptor of the matched H-PLM URSP rule indicates a different S-NSSAI (shown as S-NSSAI-a) and a different DNN selection (shown as broadband). The evaluation decision is to update the matched H-PLMN URSP rule. For instance, the decision is to update the existing H-PLMN policy to include the V-PLMN guidance (DNN and S-NSSAI) as precedence "1" with PLMN criteria listing the PLMN ID where this route selection Descriptor is valid, and to update the H-PLMN existing parameters as precedence "2."

In particular, the update here involves adding the V-PLMN URSP's route selection descriptor to the matched H-PLM URSP rule. Further, as a route selection validation criteria, a PLMN ID of the V-PLMN is added to this V-PLMN URSP's route selection descriptor such that the UE 610 can use the V-PLMN URSP's route selection descriptor only when it determines a network ID that matches the PLMN ID. The precedence in the H-PLMN URSP's route selection descriptor is also updated. Optionally, the H-PLMN URSP's route selection descriptor can be updated to include the PLMN ID of the H-PLMN. The relevant connectivity parameters of the URSP rules are underlined in Table 3.

**Table 3.**

| V-PLMN URSP | | H-PLMN Matching URSP | | H-PLMN Combined URSP | |
|---|---|---|---|---|---|
| Traffic Descriptor | Route Selection Descriptor | Traffic Descriptor | Route Selection Descriptor | Traffic Descriptor | Route Selection Descriptor |
| Rule Precedence = 1 | Route Selection Descriptor Precedence = 1 | Rule Precedence = 1 | Route Selection Descriptor Precedence = 1 | Rule Precedence = 1 | Route Selection Descriptor Precedence = 1 |
| Application Descriptor = App 1 | | Application Descriptor = App 1 | | Application Descriptor = App 1 | |
| | Network Slice Selection: S-NSSAI-x SSC Mode Selection: SSC Mode 3 | | Network Slice Selection: S-NSSAI-a SSC Mode Selection: SSC Mode 3 | | Network Slice Selection: S-NSSAI-x SSC Mode Selection: SSC Mode 3 |
| | DNN Selection: internet | | DNN Selection: broadband | | DNN Selection: internet |
| | Access Type Preference: 3GPP access | | Access Type Preference: 3GPP access | | Access Type Preference: 3GPP access |
| | | | | | PLM Criteria: PLMN ID |
| | | | | | Route Selection Descriptor Precedence = 2 |
| | | | | | Network Slice Selection: S-NSSAI-a SSC Mode Selection: SSC Mode 3 DNN |
| | | | | | Selection: broadband Access Type Preference: 3GPP access |

A third illustrative use case involves HR roaming. The HR roaming enables the UE 610 to receive a service from the V-PLMN, where a PDU session for the service is supported by the V-PLMN and the H-PLMN. In other words, traffic to and from the UE 610 is managed at least in part by the H-PLMN, although the UE 610 is connected to the V-PLMN. In this illustrative use case, the V-PCF 620 sends the V-PLMN URSP guidance 622 to use dedicated DNN and to provide HR romaing. The H-PLMN does not accept this guidance 622 and, instead, provides an existing URSP to be used in the V-PLMN.

In particular, the traffic descriptor of the V-PLMN URSP guidance 622 is matched to an H-PLMN URSP rule that indicates a different DNN selection (e.g., broadband instead of internet). The update here involves copying the matched H-PLMN URSP's route selection descriptor for sending to the UE 610. The relevant connectivity parameters of the URSP rules are underlined in Table 4.

**Table 4.**

| V-PLMN URSP | | H-PLMN Matching URSP | | H-PLMN Combined URSP | |
|---|---|---|---|---|---|
| Traffic Descriptor | Route Selection Descriptor | Traffic Descriptor | Route Selection Descriptor | Traffic Descriptor | Route Selection Descriptor |
| Rule Precedence = 1 | Route Selection Descriptor Precedence = 1 | Rule Precedence = 1 | Route Selection Descriptor Precedence = 1 | Rule Precedence = 1 | Route Selection Descriptor Precedence = 1 |
| Application Descriptor = App2 | | Application Descriptor = App2 | | Application Descriptor = App2 | |
| | Network Slice Selection: S-NSSAI-a SSC Mode Selection: SSC Mode 3 | | Network Slice Selection: S-NSSAI-a SSC Mode Selection: SSC Mode 3 | | Network Slice Selection: S-NSSAI-a SSC Mode Selection: SSC Mode 3 |
| | DNN Selection: internet | | DNN Selection: broadband | | DNN Selection: broadband |
| | Access Type Preference: 3GPP access | | Access Type Preference: 3GPP access | | Access Type Preference: 3GPP access |

A fourth illustrative use case involves multiple S-NSSAI support for the same application in the V-PLMN. In other words, the V-PLMN may configure multiple network slices to support the application for the UE 610. In comparison, the H-PLMN may configure one or more multiple network slices to support the application for the UE 610. The V-PLMN's network slices configured can be different from the ones of the H-PLMN. In this illustrative use case, the V-PCF 620 sends the V-PLMN URSP guidance 622 that includes a traffic descriptor and two route selection descriptors corresponding to two policies for using an application by the UE 610. The first policy corresponds to a particular network slice (having S-NSSAI-x) with an operator defined SST. The second policy corresponds to a different network slice (having S-NSSAI-y). The traffic descriptor is matched to an H-PLMN URSP rule that indicates a different network slice that the H-PLMN supports for the application. The H-PCF 640 selects one of the V-PLMN's network slices be based on a number of factors, such that the H-PLMN can choose the best suitable S-NSSAI. These factors can relate to matching at best as possible the selected V-PLMN route selection descriptor with the HPLM route selection descriptor (e.g., the selected V-PLMN's network slice corresponds to a V-PLMN policy that best approximates the H-PLMN policy, except for its H-PLMN's network slice). In this case, the H-PCF 640 selects the first policy because the use of N-SSAI-x allows an operator defined SST, and the H-PLMN rule selection descriptor requires an SST of "1." The H-PCF 640 includes the NDD and S-NSSAI-x of the first policy as precedence "1" with PLMN criteria listing the PLMN ID of the V-PLMN where this route selection descriptor is valid, and updates the H-PLMN existing parameters as precedence "2."

In particular, the update here involves adding the V-PLMN URSP's route selection descriptor of the selected N-SSAI (in this illustrative case, S-NSSAI-x instead of S-NSSAI-y) to the matched H-PLMN URSP rule. Further, as a route selection validation criteria, a PLMN ID of the V-PLMN is added to this V-PLMN URSP's route selection descriptor such that the UE 610 can use the V-PLMN URSP's route selection descriptor only when it determines a network ID that matches the PLMN ID. The precedence in the H-PLMN URSP's route selection descriptor is also updated. Optionally, the H-PLMN URSP's route selection descriptor can be updated to include the PLMN ID of the H-PLMN. The relevant connectivity parameters of the URSP rules are underlined in Table 5.

**Table 5.**

| V-PLMN URSP | | H-PLMN Matching URSP | | H-PLMN Combined URSP | |
|---|---|---|---|---|---|
| Traffic Descriptor | Route Selection Descriptor | Traffic Descriptor | Route Selection Descriptor | Traffic Descriptor | Route Selection Descriptor |
| Rule Precedence = 1 | Route Selection Descriptor Precedence = 1 | Rule Precedence = 1 | Route Selection Descriptor Precedence = 1 | Rule Precedence = 1 | Route Selection Descriptor Precedence = 1 |
| Application Descriptor = App3 | | Application Descriptor = App3 | | Application Descriptor = App3 | |
| | Network Slice Selection: S-NSSAI-x (operator defined SST) | | Network Slice Selection: S-NSSAI-a (SST=1) SSC Mode Selection: SSC Mode 3 | | Network Slice Selection: S-NSSAI-x (operator defined SST) |
| | DNN Selection: internet | | | | DNN Selection: internet |
| | | | DNN Selection: broadband | | |
| | Access Type Preference: 3GPP access Non-Seamless Offload Indication: permitted (WLA SSID-x) | | | | Access Type Preference: 3GPP access Non-Seamless Offload Indication: permitted (WLA SSID-x) |
| | | | Access Type Preference: 3GPP access | | |
| | | | | | PLM Criteria: PLMN ID |
| | Route Selection Descriptor Precedence = 2 | | | | Route Selection Descriptor Precedence = 2 |
| | Network Slice Selection: S-NSSAI-y Access Type Preference: 3GPP access | | | | Network Slice Selection: S-NSSAI-a (SST=1) SSC Mode Selection: SSC Mode 3 |
| | | | | | DNN Selection: broadband |
| | | | | | Access Type Preference: 3GPP access |

A fifth illustrative use case involves a V-PLMN guidance that is rejected by the H-PLMN. Here, the V-PLMN URSP guidance 622 indicates a V-PLMN rule for an application (identified in Table 6 as "App7").

The H-PCF 640 does not accept this guidance 622 and decides not to generate a policy. Thus, no URSP rule is sent to the UE 610 for the application. The UE 610 can rely on a default (e.g., a match all) URSP rule previously stored.

**Table 6.**

| V-PLMN URSP | | H-PLMN Matching URSP | | H-PLMN Combined URSP | |
|---|---|---|---|---|---|
| Traffic Descriptor | Route Selection Descriptor | Traffic Descriptor | Route Selection Descriptor | Traffic Descriptor | Route Selection Descriptor |
| Rule Precedence = 1 | Route Selection Descriptor Precedence = 1 | | | Rejected | |
| Application Descriptor = App7 | | | | | |
| | Location criteria: SFO Airport | | | | |
| | Access Type: non-3GPP Time Window: 6-7pm | | | | |

Referring back to the above five illustrative cases, the UE 610 receives and stores the various H-PLMN Combined URSP rules. An example of such storage is shown in Table 7.

**Table 7.**

| Combined URSP (H-PLMN and V-PLMN guidance) | | |
|---|---|---|
| Traffic descriptor | Route Selection Descriptor | |
| Rule Precedence = 1 | Route Selection Descriptor Precedence = 1 | |
| Traffic Descriptor: Application de scriptor=AppX | Network Slice Selection: S-NSSAI-a | |
| | Access Type Preference: 3GPP access | |
| | Non-Seamless Offload Indication: Permitted (WLA SSID-x) | |
| Rule Precedence = 2 | Route Selection Descriptor Precedence = 1 | Route Selection Descriptor Precedence = 2 |
| Traffic Descriptor: Application descriptor=App1 | Network Slice Selection: S-NSSAI-x | Network Slice Selection: S-NSSAI-a |
| | SSC Mode Selection: SSC Mode 3 | SSC Mode Selection: SSC Mode 3 DNN Selection: broadband |
| | DNN Selection: internet Access Type Preference: 3GPP access | Access Type Preference: 3GPP access |
| | PLMN Criteria: PLMN ID | |
| Rule Precedence = 3 | Route Selection Descriptor Precedence = 1 | |
| Traffic Descriptor: Application de scriptor=App2 | Network Slice Selection: S-NSSAI-a | |
| | SSC Mode Selection: SSC Mode 3 | |
| | DNN Selection: broaband | |
| | Access Type Preference: 3GPP access | |
| Rule Precedence = 4 | Route Selection Descriptor Precedence = 1 | Route Selection Descriptor Precedence = 2 |
| Traffic Descriptor: Application descriptor=App3 | Network Slice Selection: S-NSSAI-x (operator defined SST) | Network Slice Selection: S-NSSAI-a (SST=1) |
| | | SSC Mode Selection: SSC Mode 3 |
| | DNN Selection: internet | Access Type Preference: 3GPP access |
| | Access Type Preference: 3GPP access | |
| | Non-Seamless Offload Indication: Permitted (WLA SSID-x) | |
| | PLMN Criteria: PLMN ID | |

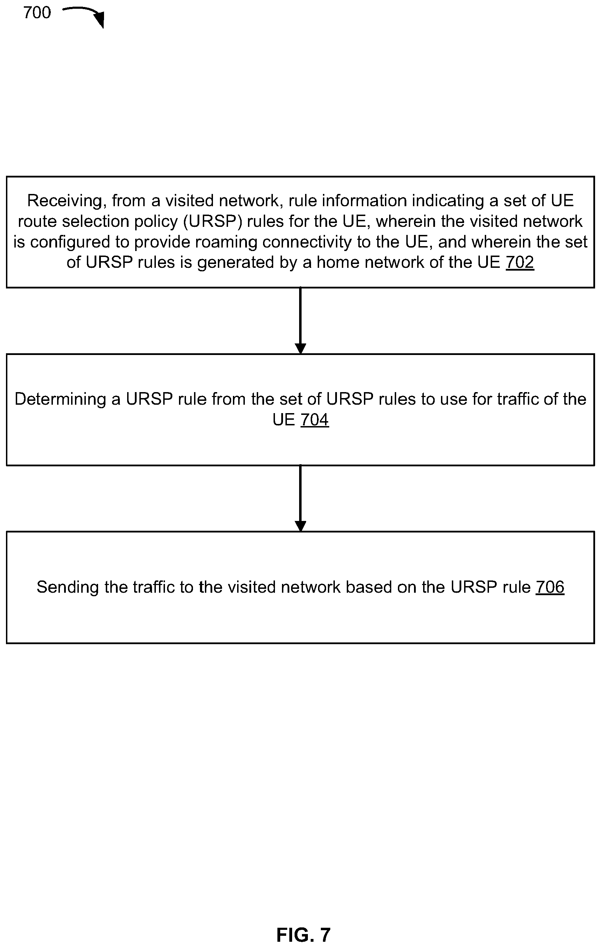

FIG. 7 illustrates an example of an operational flow/algorithmic structure 700 for a UE to use URSP rules, in accordance with some embodiments. The UE is an example of the UE 106, 206, 310, 410, 510, 610 described herein above or UE 1100 or components thereof, for example, processors 1104. The UE can be associated with a home network (e.g., a H-PLMN). Roaming services to the UE can also be provided from a visited network (e.g., a V-PLMN).

The operation flow/algorithmic structure 700 may include, at 702, receiving, from a visited network, rule information indicating a set of UE route selection policy (URSP) rules for the UE, wherein the visited network is configured to provide roaming connectivity to the UE, and wherein the set of URSP rules is generated by a home network of the UE. For instance, the rule information is received as part of a UE registration procedure with the visited network or a UE configuration update while the UE is connected to the visited network. The rule information can be sent by the home network to the UE via the visited network. This rule information can indicate a set of URSP rules that the home network generated based on guidance information of the visited network and its own set of URSP rules defined for the UE. The UE may store the received URSP rules (e.g., in a table having a similar format as Table 7).

The operation flow/algorithmic structure 700 may include, at 704, determining a URSP rule from the set of URSP rules to use for traffic of the UE. For instance, for particular traffic, the UE uses a descriptor of the traffic to look up traffic descriptors of the stored URSP rules. If a match is determined, the UE then determines the route selection descriptor of the matched URSP rule. If no match is determined, the UE may determine a route selection descriptor of a match all URSP rule. If more than one route selection descriptors are possible to select, the UE can use a PLMN criteria to select one of them. In particular, the UE selects the route selection descriptors that has a PLMN ID that matches a network identifier to which the UE is connected (e.g., the PLMN ID of the visited network). The selected route selection descriptor indicates connectivity parameters for the traffic.

The operation flow/algorithmic structure 700 may include, at 706, sending the traffic to the visited network based on the URSP rule. For instance, the selected route selection descriptor indicates connectivity parameters for the traffic. The UE uses the connectivity parameters to send and/or receive the traffic to and/or from the visited network (e.g., via a RAN thereof).

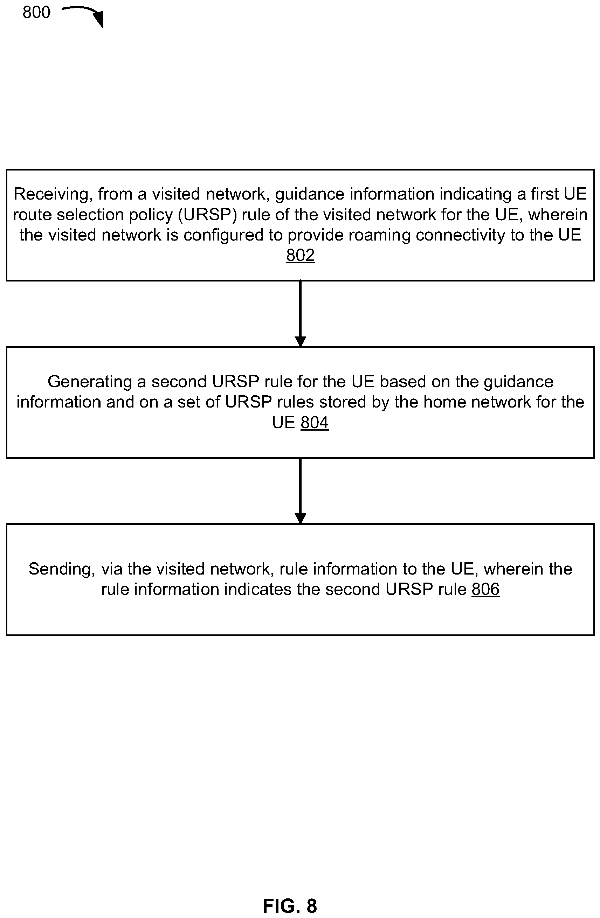

FIG. 8 illustrates an example of an operational flow/algorithmic structure 800 for a home network of a UE to define URSP rules of a UE based on guidance information of a visited network, in accordance with some embodiments. The home network is an example of the home network 330 or any system that includes one or more processors and one or more memory storing computer-readable instructions that, upon execution by the one or more processors, configure the system to provide network functions according to a communications technology, such as 5G communications.

The operation flow/algorithmic structure 800 may include, at 802, receiving, from a visited network, guidance information indicating a first UE route selection policy (URSP) rule of the visited network for the UE, wherein the visited network is configured to provide roaming connectivity to the UE. For instance, the guidance information is V-PLMN URSP guidance received in a Npcf_UEPolicyControl_Create_Request message.

The operation flow/algorithmic structure 800 may include, at 804, generating a second URSP rule for the UE based on the guidance information and on a set of URSP rules stored by the home network for the UE. For instance, the home network performs a policy evaluation and a policy preparation that involves determining whether the first URSP rule is to be accepted or rejected, whether an update to the first URSP rule is needed or is rejected, and/or whether the first URSP rule is to be combined with an existing URSP rule. The second URSP rule is generated according to this determination.

The operation flow/algorithmic structure 800 may include, at 806, sending, via the visited network, rule information to the UE, wherein the rule information indicates the second URSP rule. For instance, the rule information is sent to the visited network in a Npcf_UEPolicyControl_Create_Response message for sending to the UE.

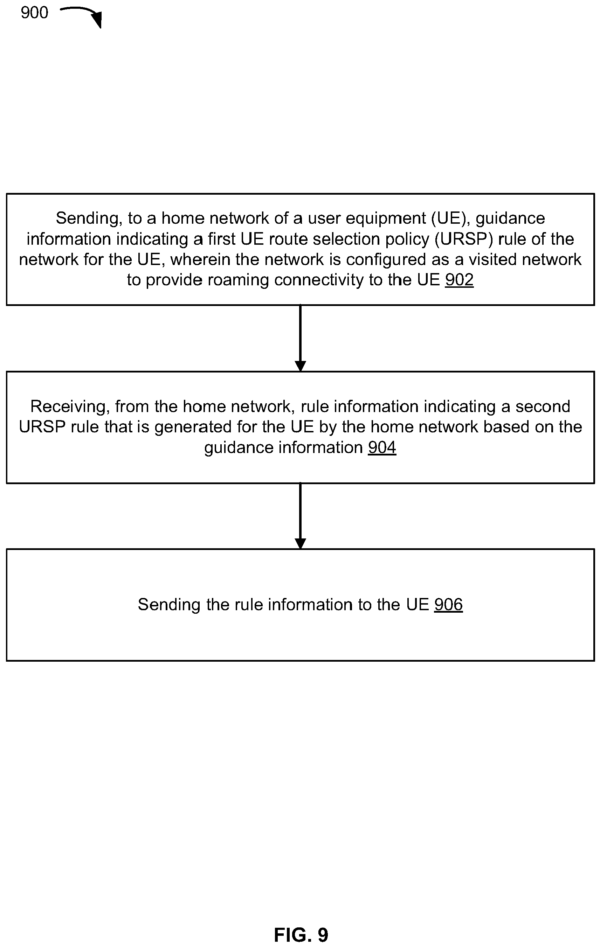

FIG. 9 illustrates an example of an operational flow/algorithmic structure 900 for a visited UE to provide guidance information to a home network of a UE, in accordance with some embodiments. The visited network is an example of the visited network 320 or any system that includes one or more processors and one or more memory storing computer-readable instructions that, upon execution by the one or more processors, configure the system to provide network functions according to a communications technology, such as 5G communications.

The operation flow/algorithmic structure 900 may include, at 902, sending, to a home network of a user equipment (UE), guidance information indicating a first UE route selection policy (URSP) rule of the network for the UE, wherein the network is configured as a visited network to provide roaming connectivity to the UE. For instance, the guidance information is V-PLMN URSP guidance sent in a Npcf_UEPolicyControl_Create Request message. The V-PLMN URSP guidance can be generated based on guidance input of an AF of the visited network, a local configuration of the visited network, and/or an operator policy of the visited network.

The operation flow/algorithmic structure 900 may include, at 904, receiving, from the home network, rule information indicating a second URSP rule that is generated for the UE by the home network based on the guidance information. This rule information can also be generated based on a set of URSP rules local to the home network and defined for the UE, a local configuration of the home network, and/or an operator policy of the home network. In an example, the rule information is received from the home network in a Npcf_UEPolicyControl_Create Response message.

The operation flow/algorithmic structure 900 may include, at 906, sending the rule information to the UE. For instance, the rule information is sent as part of a UE update configuration procedure. This procedure may, but need not, be a part of a UE registration procedure with the visited network.

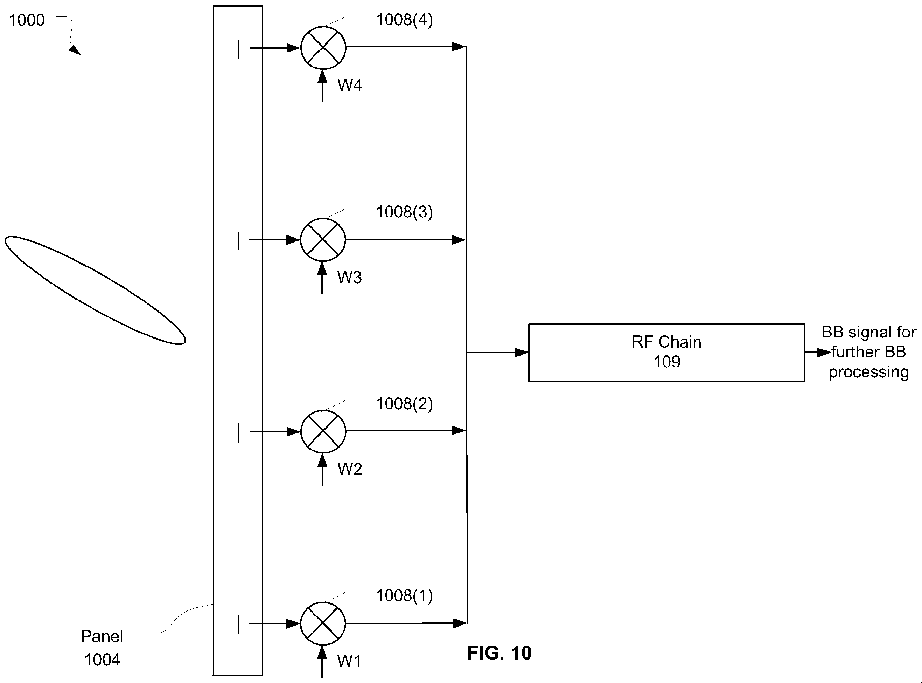

FIG. 10 illustrates receive components 1000 of the UE 106, in accordance with some embodiments. The receive components 1000 may include an antenna panel 1004 that includes a number of antenna elements. The panel 1004 is shown with four antenna elements, but other embodiments may include other numbers.

The antenna panel 1004 may be coupled to analog beamforming (BF) components that include a number of phase shifters 1008(1) - 1008(4). The phase shifters 1008(1) - 1008(4) may be coupled with a radio-frequency (RF) chain 1012. The RF chain 1012 may amplify a receive analog RF signal, downconvert the RF signal to baseband, and convert the analog baseband signal to a digital baseband signal that may be provided to a baseband processor for further processing.

In various embodiments, control circuitry, which may reside in a baseband processor, may provide BF weights (for example W1 - W4), which may represent phase shift values, to the phase shifters 1008(1) - 1008(4) to provide a receive beam at the antenna panel 1004. These BF weights may be determined based on the channel-based beamforming.

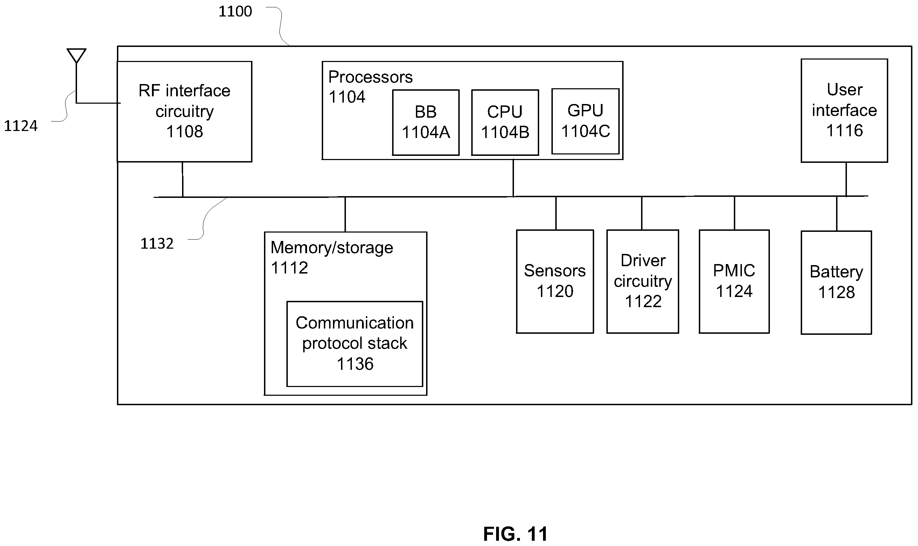

FIG. 11 illustrates a UE 1100, in accordance with some embodiments. The UE 1100 may be similar to and substantially interchangeable with UE 106 of FIG. 1.

Similar to that described above with respect to UE 114, the UE 1100 may be any mobile or non-mobile computing device, such as mobile phones, computers, tablets, industrial wireless sensors (for example, microphones, carbon dioxide sensors, pressure sensors, humidity sensors, thermometers, motion sensors, accelerometers, laser scanners, fluid level sensors, inventory sensors, electric voltage/current meters, actuators, etc.), video surveillance/monitoring devices (for example, cameras, video cameras, etc.), wearable devices, or relaxed-IoT devices. In some embodiments, the UE may be a reduced capacity UE or NR-Light UE.

The UE 1100 may include processors 1104, RF interface circuitry 1108, memory/storage 1112, user interface 1116, sensors 1120, driver circuitry 1122, power management integrated circuit (PMIC) 1124, and battery 1128. The components of the UE 1100 may be implemented as integrated circuits (ICs), portions thereof, discrete electronic devices, or other modules, logic, hardware, software, firmware, or a combination thereof. The block diagram of FIG. 11 is intended to show a high-level view of some of the components of the UE 1100. However, some of the components shown may be omitted, additional components may be present, and different arrangements of the components shown may occur in other implementations.

The components of the UE 1100 may be coupled with various other components over one or more interconnects 1132, which may represent any type of interface, input/output, bus (local, system, or expansion), transmission line, trace, optical connection, etc. that allows various circuit components (on common or different chips or chipsets) to interact with one another.

The processors 1104 may include processor circuitry such as baseband processor circuitry (BB) 1104A, central processor unit circuitry (CPU) 1104B, and graphics processor unit circuitry (GPU) 1104C. The processors 1104 may include any type of circuitry or processor circuitry that executes or otherwise operates computer-executable instructions, such as program code, software modules, or functional processes from memory/storage 1112 to cause the UE 1100 to perform operations as described herein.

In some embodiments, the baseband processor circuitry 1104A may access a communication protocol stack 1136 in the memory/storage 1112 to communicate over a 3GPP compatible network. In general, the baseband processor circuitry 1104A may access the communication protocol stack to: perform user plane functions at a PHY layer, MAC layer, RLC layer, PDCP layer, SDAP layer, and PDU layer; and perform control plane functions at a PHY layer, MAC layer, RLC layer, PDCP layer, RRC layer, and a non-access stratum "NAS" layer. In some embodiments, the PHY layer operations may additionally/alternatively be performed by the components of the RF interface circuitry 1108.

The baseband processor circuitry 1104A may generate or process baseband signals or waveforms that carry information in 3GPP-compatible networks. In some embodiments, the waveforms for NR may be based on cyclic prefix OFDM (CP-OFDM) in the uplink or downlink, and discrete Fourier transform spread OFDM (DFT-S-OFDM) in the uplink.

The baseband processor circuitry 1104A may also access group information 1124 from memory/storage 1112 to determine search space groups in which a number of repetitions of a PDCCH may be transmitted.

The memory/storage 1112 may include any type of volatile or non-volatile memory that may be distributed throughout the UE 1100. In some embodiments, some of the memory/storage 1112 may be located on the processors 1104 themselves (for example, L1 and L2 cache), while other memory/storage 1112 is external to the processors 1104 but accessible thereto via a memory interface. The memory/storage 1112 may include any suitable volatile or non-volatile memory, such as, but not limited to, dynamic random-access memory (DRAM), static random-access memory (SRAM), erasable programmable read-only memory (EPROM), electrically erasable programmable read-only memory (EEPROM), Flash memory, solid-state memory, or any other type of memory device technology.

The RF interface circuitry 1108 may include transceiver circuitry and a radio frequency front module (RFEM) that allows the UE 1100 to communicate with other devices over a radio access network. The RF interface circuitry 1108 may include various elements arranged in transmit or receive paths. These elements may include, for example, switches, mixers, amplifiers, filters, synthesizer circuitry, control circuitry, etc.

In the receive path, the RFEM may receive a radiated signal from an air interface via an antenna 1124 and proceed to filter and amplify (with a low-noise amplifier) the signal. The signal may be provided to a receiver of the transceiver that down-converts the RF signal into a baseband signal that is provided to the baseband processor of the processors 1104.

In the transmit path, the transmitter of the transceiver up-converts the baseband signal received from the baseband processor and provides the RF signal to the RFEM. The RFEM may amplify the RF signal through a power amplifier prior to the signal being radiated across the air interface via the antenna 1124.

In various embodiments, the RF interface circuitry 1108 may be configured to transmit/receive signals in a manner compatible with NR access technologies.

The antenna 1124 may include a number of antenna elements that each convert electrical signals into radio waves to travel through the air and to convert received radio waves into electrical signals. The antenna elements may be arranged into one or more antenna panels. The antenna 1124 may have antenna panels that are omnidirectional, directional, or a combination thereof to enable beamforming and multiple input, multiple output communications. The antenna 1124 may include microstrip antennas, printed antennas fabricated on the surface of one or more printed circuit boards, patch antennas, phased array antennas, etc. The antenna 1124 may have one or more panels designed for specific frequency bands including bands in FR1 or FR2.

The user interface circuitry 1116 includes various input/output (I/O) devices designed to enable user interaction with the UE 1100. The user interface 1116 includes input device circuitry and output device circuitry. Input device circuitry includes any physical or virtual means for accepting an input including, inter alia, one or more physical or virtual buttons (for example, a reset button), a physical keyboard, keypad, mouse, touchpad, touchscreen, microphones, scanner, headset, or the like. The output device circuitry includes any physical or virtual means for showing information or otherwise conveying information, such as sensor readings, actuator position(s), or other like information. Output device circuitry may include any number or combinations of audio or visual display, including, inter alia, one or more simple visual outputs/indicators (for example, binary status indicators, such as light emitting diodes (LEDs) and multi-character visual outputs, or more complex outputs, such as display devices or touchscreens (for example, liquid crystal displays (LCDs), LED displays, quantum dot displays, projectors, etc.), with the output of characters, graphics, multimedia objects, and the like being generated or produced from the operation of the UE 1100.

The sensors 1120 may include devices, modules, or subsystems whose purpose is to detect events or changes in its environment and send the information (sensor data) about the detected events to some other device, module, subsystem, etc. Examples of such sensors include, *inter alia,* inertia measurement units comprising accelerometers; gyroscopes; or magnetometers; microelectromechanical systems or nanoelectromechanical systems comprising 3-axis accelerometers; 3-axis gyroscopes; or magnetometers; level sensors; flow sensors; temperature sensors (for example, thermistors); pressure sensors; barometric pressure sensors; gravimeters; altimeters; image capture devices (for example; cameras or lensless apertures); light detection and ranging sensors; proximity sensors (for example, infrared radiation detector and the like); depth sensors; ambient light sensors; ultrasonic transceivers; microphones or other like audio capture devices; etc.

The driver circuitry 1122 may include software and hardware elements that operate to control particular devices that are embedded in the UE 1100, attached to the UE 1100, or otherwise communicatively coupled with the UE 1100. The driver circuitry 1122 may include individual drivers allowing other components to interact with or control various input/output (I/O) devices that may be present within, or connected to, the UE 1100. For example, driver circuitry 1122 may include a display driver to control and allow access to a display device, a touchscreen driver to control and allow access to a touchscreen interface, sensor drivers to obtain sensor readings of sensor circuitry 1120 and control and allow access to sensor circuitry 1120, drivers to obtain actuator positions of electro-mechanic components or control and allow access to the electro-mechanic components, a camera driver to control and allow access to an embedded image capture device, audio drivers to control and allow access to one or more audio devices.

The PMIC 1124 may manage power provided to various components of the UE 1100. In particular, with respect to the processors 1104, the PMIC 1124 may control power-source selection, voltage scaling, battery charging, or DC-to-DC conversion.

In some embodiments, the PMIC 1124 may control, or otherwise be part of, various power saving mechanisms of the UE 1100. For example, if the platform UE is in an RRC_Connected state, where it is still connected to the RAN node as it expects to receive traffic shortly, then it may enter a state known as Discontinuous Reception Mode (DRX) after a period of inactivity. During this state, the UE 1100 may power down for brief intervals of time and thus save power. If there is no data traffic activity for an extended period of time, then the UE 1100 may transition off to an RRC_Idle state, where it disconnects from the network and does not perform operations, such as channel quality feedback, handover, etc. The UE 1100 goes into a very low power state and it performs paging where again it periodically wakes up to listen to the network and then powers down again. The UE 1100 may not receive data in this state; in order to receive data, it must transition back to RRC_Connected state. An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

A battery 1128 may power the UE 1100, although in some examples the UE 1100 may be mounted deployed in a fixed location, and may have a power supply coupled to an electrical grid. The battery 1128 may be a lithium ion battery, a metal-air battery, such as a zinc-air battery, an aluminum-air battery, a lithium-air battery, and the like. In some implementations, such as in vehicle-based applications, the battery 1128 may be a typical lead-acid automotive battery.

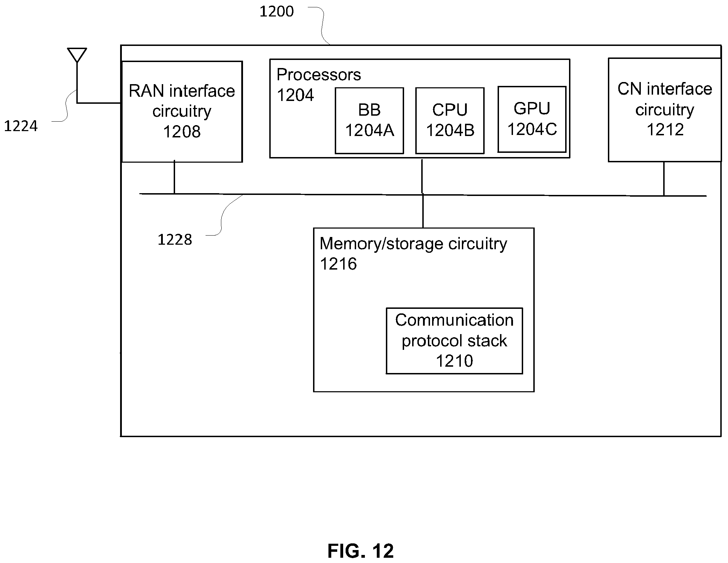

FIG. 12 illustrates a gNB 1200, in accordance with some embodiments. The gNB node 1200 may be similar to and substantially interchangeable with the base station 104 of FIG. 1.

The gNB 1200 may include processors 1204, RF interface circuitry 1208, core network (CN) interface circuitry 1212, and memory/storage circuitry 1216.

The components of the gNB 1200 may be coupled with various other components over one or more interconnects 1228.

The processors 1204, RF interface circuitry 1208, memory/storage circuitry 1216 (including communication protocol stack 1210), antenna 1224, and interconnects 1228 may be similar to like-named elements shown and described with respect to FIG. 10.

The CN interface circuitry 1212 may provide connectivity to a core network, for example, a 5^{th} Generation Core network (5GC) using a 5GC-compatible network interface protocol, such as carrier Ethernet protocols, or some other suitable protocol. Network connectivity may be provided to/from the gNB 1200 via a fiber optic or wireless backhaul. The CN interface circuitry 1212 may include one or more dedicated processors or FPGAs to communicate using one or more of the aforementioned protocols. In some implementations, the CN interface circuitry 1212 may include multiple controllers to provide connectivity to other networks using the same or different protocols.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

For one or more embodiments, at least one of the components set forth in one or more of the preceding figures may be configured to perform one or more operations, techniques, processes, or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### Examples

In the following sections, further exemplary embodiments are provided.

Example 1 includes a method implemented by a user equipment (UE), the method comprising: receiving, from a visited network, rule information indicating a set of UE route selection policy (URSP) rules for the UE, wherein the visited network is configured to provide roaming connectivity to the UE, and wherein the set of URSP rules is generated by a home network of the UE; determining a URSP rule from the set of URSP rules to use for traffic of the UE; and sending the traffic to the visited network based on the URSP rule.

Example 2 includes the method of example 1, further comprising: storing the set of URSP rules in the one or more memories, wherein the URSP rule includes a route selection descriptor an identifier of the visited network.

Example 2 includes the method of example 2, wherein the identifier of the visited network is a public land mobile network (PLMN) identifier (ID), and wherein the method further comprises: determining that the traffic is associated with an application; determining that the URSP rule applies to the application based on a traffic descriptor of the URSP rule; and determining a match between the PLMN ID of the route selection description and an identifier of a network to which the UE is connected.

Example 4 includes the method of any of examples 1-3, wherein the rule information is received as part of a UE registration with the visited network or a UE configuration update procedure.

Example 5 includes the method of any of examples 1-4, wherein the set of URSP rules is generated by the home network based on guidance information of the visited network to the home network, wherein the guidance information indicates the set of URSP rules or a different set of URSP rules.

Example 6 includes the method of any of examples 1-5, wherein the URSP rule is a combined URSP rule that is generated by the home network based on a first URSP rule of the visited network and on a second URSP rule of the home network.

Example 7 includes method implemented by a home network of a user equipment (UE), the method comprising: receiving, from a visited network, guidance information indicating a first UE route selection policy (URSP) rule of the visited network for the UE, wherein the visited network is configured to provide roaming connectivity to the UE; generating a second URSP rule for the UE based on the guidance information and on a set of URSP rules stored by the home network for the UE; and sending, via the visited network, rule information to the UE, wherein the rule information indicates the second URSP rule.

Example 8 includes the method of example 7, wherein the guidance information is received from the visited network in a Npcf_UEPolicyControl_Create_Request message and the rule information is sent to the visited network in a
Npcf_UEPolicyControl_Create Response message for sending to the UE.

Example 9 includes the method of any of examples 7-8, further comprising: evaluating the guidance information based on at least one of: the set of URSP rules, a local configuration of the home network, an operator policy of the home network, or an application function of the home network; and determining based on the evaluating that the second URSP rule is to be created as a copy of the guidance information, as an update to the guidance information, or as a combination of the guidance information with a URSP rule from the set of URSP rules.

Example 10 includes the method of any of examples 7-9, wherein the guidance information indicates a third URSP rule of the visited network, and wherein the method further comprises: determining that the third URSP rule is to be rejected; and sending, to the visited network, response information indicating that the third URSP rule is rejected.

Example 11 includes the method of any of examples 7-10, further comprising: determining that the guidance information has no match with the set of URSP rules, wherein the second URSP rule is generated as a copy of the guidance information.

Example 12 includes the method of any of examples 7-11, further comprising: determining a match between the guidance information and a third URSP rule of the set of URSP rules; and determining that the third URSP rule is to be updated based on the guidance information, wherein the second URSP rule is generated as an update to the third URSP rule.

Example 13 includes the method of example 12, wherein the update includes an addition to an identifier of the visited network to a first route selection descriptor indicated by the guidance information, and wherein the update further includes a change to a precedence included in a second route selection descriptor of the third URSP rule.

Example 14 includes the method of any of examples 7-13, further comprising: determining a match between the guidance information and a third URSP rule of the set of URSP rules; and determining that the third URSP rule is to be used instead of an update to the guidance information, wherein the second URSP rule is generated as copy of the third URSP rule.

Example 15 includes the method of any of examples 7-14, further comprising: determining a match between the guidance information and a third URSP rule of the set of URSP rules, wherein the guidance information includes a plurality of network slice identifiers of the visited network; and determining that the third URSP rule is to be updated based on a selection of a network slide identifier from the plurality of network slide identifiers, wherein the second URSP rule is generated as an update to the third URSP rule.

Example 16 includes the method of example 15, wherein the update includes the network slice identifier of the visited network included in a first route selection descriptor indicated by the guidance information, an addition of an identifier of the visited network to the first route selection descriptor, and a change to a precedence included in a second route selection descriptor of the third URSP rule.

Example 17 includes a method implemented by a network, the method comprising: sending, to a home network of a user equipment (UE), guidance information indicating a first UE route selection policy (URSP) rule of the network for the UE, wherein the network is configured as a visited network to provide roaming connectivity to the UE; receiving, from the home network, rule information indicating a second URSP rule that is generated for the UE by the home network based on the guidance information; and sending the rule information to the UE.

Example 18 includes a method of example 17 further comprising: generating the first URSP rule based on a local configuration of the network, an operator policy of the network, and input of an application function of the network.

Example 19 includes a method of any of examples 17-18, wherein the rule information includes a copy of the guidance information, an update to the guidance information, or a combination of a portion of the guidance information with a portion of a set of URSP rules stored by the home network.

Example 20 includes a method of any of examples 17-19, further comprising: receiving traffic from the UE based on the second URSP rule, wherein the traffic corresponds to a service of the visited network or a service of the home network.

Example 21 includes a UE comprising means to perform one or more elements of a method described in or related to any of the examples 1-6.

Example 22 includes one or more non-transitory computer-readable media comprising instructions to cause a UE, upon execution of the instructions by one or more processors of the UE, to perform one or more elements of a method described in or related to any of the examples 1-6.

Example 23 includes a UE comprising logic, modules, or circuitry to perform one or more elements of a method described in or related to any of the examples 1-6.

Example 24 includes a UE comprising: one or more processors and one or more computer-readable media comprising instructions that, when executed by the one or more processors, cause the one or more processors to perform one or more elements of a method described in or related to any of the examples 1-6.

Example 25 includes a system comprising means to perform one or more elements of a method described in or related to any of the examples 1-6.

Example 26 includes a network comprising means to perform one or more elements of a method described in or related to any of the examples 7-20.

Example 27 includes one or more non-transitory computer-readable media comprising instructions to cause a network, upon execution of the instructions by one or more processors of the network, to perform one or more elements of a method described in or related to any of the examples 7-20.

Example 28 includes a network comprising logic, modules, or circuitry to perform one or more elements of a method described in or related to any of the examples 7-20.

Example 29 includes a network comprising: one or more processors and one or more computer-readable media comprising instructions that, when executed by the one or more processors, cause the one or more processors to perform one or more elements of a method described in or related to any of the examples 7-20.

Example 30 includes a system comprising means to perform one or more elements of a method described in or related to any of the examples 1-20.

Any of the above-described examples may be combined with any other example (or combination of examples), unless explicitly stated otherwise. The foregoing description of one or more implementations provides illustration and description but is not intended to be exhaustive or to limit the scope of embodiments to the precise form disclosed. Modifications and variations are possible in light of the above teachings or may be acquired from practice of various embodiments.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A user equipment, UE, comprising:
one or more processors; and
one or more memory storing computer-readable instructions that, upon execution by the one or more processors, configure the UE to:
receive, from a visited network, rule information indicating a set of UE route selection policy, URSP, rules for the UE, wherein the visited network is configured to provide roaming connectivity to the UE, and wherein the set of URSP rules is generated by a home network of the UE;
determine a URSP rule from the set of URSP rules to use for traffic of the UE; and
send the traffic to the visited network based on the URSP rule.

2. The UE of claim 1, wherein the execution of the computer-readable instructions further configures the UE to:
store the set of URSP rules in the one or more memories, wherein the URSP rule includes a route selection descriptor, an identifier of the visited network.

3. The UE of claim 1 or claim 2, wherein the rule information is received as part of a UE registration with the visited network or a UE configuration update procedure.

4. The UE of any preceding claim, wherein the set of URSP rules is generated by the home network based on guidance information of the visited network to the home network, wherein the guidance information indicates the set of URSP rules or a different set of URSP rules.

5. A method implemented by a home network of a user equipment, UE, the method comprising:
receiving, from a visited network, guidance information indicating a first UE route selection policy, URSP, rule of the visited network for the UE, wherein the visited network is configured to provide roaming connectivity to the UE;
generating a second URSP rule for the UE based on the guidance information and on a set of URSP rules stored by the home network for the UE; and
sending, via the visited network, rule information to the UE, wherein the rule information indicates the second URSP rule.

6. The method of claim 5, wherein the guidance information is received from the visited network in a Npcf_UEPolicyControl_Create_Request message and the rule information is sent to the visited network in a Npcf_UEPolicyControl_Create Response message for sending to the UE.

7. The method of claim 5 or claim 6, further comprising:
evaluating the guidance information based on at least one of: the set of URSP rules, a local configuration of the home network, an operator policy of the home network, or an application function of the home network; and
determining based on the evaluating that the second URSP rule is to be created as a copy of the guidance information, as an update to the guidance information, or as a combination of the guidance information with a URSP rule from the set of URSP rules.

8. The method of any of claims 5 to 7, wherein the guidance information indicates a third URSP rule of the visited network, and wherein the method further comprises:
determining that the third URSP rule is to be rejected; and
sending, to the visited network, response information indicating that the third URSP rule is rejected.

9. The method of any of claims 5 to 8, further comprising:
determining that the guidance information has no match with the set of URSP rules, wherein the second URSP rule is generated as a copy of the guidance information.

10. The method of any of claim 5 to 9, further comprising:
determining a match between the guidance information and a third URSP rule of the set of URSP rules; and
determining that the third URSP rule is to be updated based on the guidance information, wherein the second URSP rule is generated as an update to the third URSP rule.

11. The method of any of claims 5 to 10, further comprising:
determining a match between the guidance information and a third URSP rule of the set of URSP rules; and
determining that the third URSP rule is to be used instead of an update to the guidance information, wherein the second URSP rule is generated as copy of the third URSP rule.

12. The method of any of claims 5 to 11, further comprising:
determining a match between the guidance information and a third URSP rule of the set of URSP rules, wherein the guidance information includes a plurality of network slice identifiers of the visited network; and
determining that the third URSP rule is to be updated based on a selection of a network slide identifier from the plurality of network slide identifiers, wherein the second URSP rule is generated as an update to the third URSP rule.

13. A network comprising:
one or more processors; and
one or more memory storing computer-readable instructions that, upon execution by the one or more processors, configure the network to:
send, to a home network of a user equipment, UE, guidance information indicating a first UE route selection policy, URSP, rule of the network for the UE, wherein the network is configured as a visited network to provide roaming connectivity to the UE;
receive, from the home network, rule information indicating a second URSP rule that is generated for the UE by the home network based on the guidance information; and
send the rule information to the UE.

14. The network of claim 13, wherein the execution of the computer-readable instructions further configures the network to:
generate the first URSP rule based on a local configuration of the network, an operator policy of the network, and input of an application function of the network.

15. The network of claim 13 or claim 14, wherein the rule information includes a copy of the guidance information, an update to the guidance information, or a combination of a portion of the guidance information with a portion of a set of URSP rules stored by the home network.
